# EUROPEAN PATENT APPLICATION

(11) **EP 4 597 740 A1**
(43) Date of publication of application: **06.08.2025**
(21) Application number: 23871303.6
(22) Date of filing: 05.06.2023
(51) Int. Cl.: H01M 50/593, H01M 10/04, H01M 10/0587, H01M 50/342, H01M 50/586

(54) **POWER STORAGE DEVICE**

(30) Priority: 30.09.2022 JP 2022158611
(71) Applicant: Panasonic Intellectual Property Management Co., Ltd., Kadoma-shi, Osaka 571-0057 (JP)
(72) Inventor: OTAKE, Yuji, Kadoma-shi, Osaka 571-0057 (JP)
(74) Representative: Novagraaf International SA
(86) International application number: PCT/JP2023/020762
(87) International publication number: WO 2024/070058

(57) **Abstract**

A power storage device (10) comprises: an electrode body (14) in which a positive electrode (11) and a negative electrode (12) are wound with a separator (13) therebetween; an exterior body (15) that serves to accommodate the electrode body (14) and has a bottomed cylinder shape with an opening therein; a sealing body (16) for closing the opening; a first insulating member (17); and a second insulating member (18). A safety valve for releasing the internal pressure in the exterior body (15) when said internal pressure rises to a level equal to or greater than a predetermined level is provided to one of the bottom section of the exterior body (15) and the sealing body (16). The first insulating member (17) is arranged between the electrode body (14) and the safety valve, the second insulating member (18) is arranged in a position facing the first insulating member (17) with the electrode body (14) therebetween, and while at a predetermined temperature, the amount of gas generated from the second insulating member (18) is greater than the amount of gas generated from the first insulating member (17).

## Description

### TECHNICAL FIELD

The present disclosure generally relates to a power storage device.

### BACKGROUND ART

As one of power storage devices, there has been known a cylindrical battery that comprises a wound electrode assembly, a bottomed cylindrical exterior housing body that houses the electrode assembly, and a sealing assembly with which an opening of the exterior housing body is capped. The cylindrical battery may be used as an assembled battery (a battery pack) in which a plurality of cylindrical batteries are connected.

The cylindrical battery is generally provided with a safety vent that discharges high-temperature gas in the battery to the outside if the internal pressure of the battery increases due to abnormal heat generation. The cylindrical battery is provided with insulating plates between the electrode assembly and the sealing assembly, and between the electrode assembly and a bottom of the exterior housing body, to prevent the occurrence of an internal short circuit. PATENT LITERATURE 1 discloses a cylindrical battery that comprises an insulating plate in which a through hole having a predetermined area is formed between an electrode assembly and a bottom of an exterior housing body.

### CITATION LIST

### PATENT LITERATURE

PATENT LITERATURE 1: International Publication No. WO 2016/067510

### SUMMARY

The reliability of the power storage device is improved by the above-described cylindrical battery. However, it is important to further improve the safety of the power storage device.

It is an advantage of the present invention to provide a power storage device with excellent safety.

To solve the above-described problem, a power storage device according to the present disclosure comprises an electrode assembly in which a positive electrode and a negative electrode are wound with a separator interposed between the positive electrode and the negative electrode, a bottomed cylindrical exterior housing body that houses the electrode assembly and has an opening, a sealing assembly with which the opening of the exterior housing body is capped, and a first insulating member and a second insulating member, in which a safety vent that releases an internal pressure of the exterior housing body if the internal pressure increases to greater than or equal to a predetermined level is provided in any one of a bottom of the exterior housing body and the sealing assembly, the first insulating member is disposed between the electrode assembly and the safety vent, the second insulating member is disposed at a position facing the first insulating member via the electrode assembly, and an amount of gas generated from the second insulating member is greater than an amount of gas generated from the first insulating member at a predetermined temperature.

According to the power storage device according to the present disclosure, the safety is improved.

### BRIEF DESCRIPTION OF DRAWING

FIG. 1 is a sectional view illustrating a power storage device of an example of an embodiment.
FIG. 2A is a perspective view illustrating a second insulating plate of an example of an embodiment.
FIG. 2B is a sectional view perpendicular to a radial direction of the second insulating plate of an example of an embodiment.
FIG. 3A is a perspective view illustrating a second insulating plate of another example of an embodiment.
FIG. 3B is a sectional view perpendicular to a radial direction of the second insulating plate of another example of an embodiment.
FIG. 4A is a perspective view illustrating a second insulating plate of another example of an embodiment.
FIG. 4B is a sectional view perpendicular to a radial direction of the second insulating plate of another example of an embodiment.

### DESCRIPTION OF EMBODIMENTS

Hereinafter, an example of an embodiment of a battery which is an example of a power storage device according to the present disclosure will be described in detail with reference to the drawings. Note that the present disclosure includes configurations formed by selectively combining a plurality of embodiments and modifications described below.

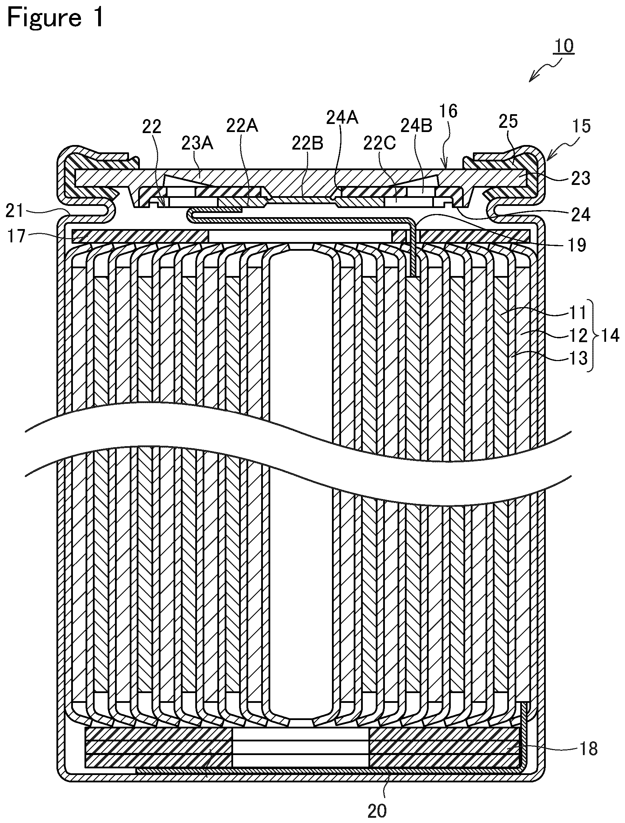

FIG. 1 is a sectional view of a battery 10 of an example of an embodiment of the present disclosure. As illustrated in FIG. 1, the battery 10 comprises an electrode assembly 14, an electrolyte, a bottomed cylindrical exterior housing body 15 that houses the electrode assembly 14 and the electrolyte, and a sealing assembly 16 with which an opening of the exterior housing body 15 is capped. Although the details will be described later, in the present embodiment, a safety vent that releases an internal pressure of the exterior housing body 15 if the internal pressure increases to greater than or equal to a predetermined level is provided in the sealing assembly 16. The electrode assembly 14 includes a positive electrode 11, a negative electrode 12, and a separator 13 interposed between the positive electrode 11 and the negative electrode 12, and has a wound structure in which the positive electrode 11 and the negative electrode 12 are wound with the separator 13 interposed therebetween. Hereinafter, the sealing assembly 16 side of the exterior housing body 15 may be described as "the upper side", and the bottom side of the exterior housing body 15 may be described as "the lower side".

The electrode assembly 14 includes a long positive electrode 11, a long negative electrode 12, and two long separators 13. In addition, the electrode assembly 14 includes, as electrode leads, a positive electrode lead 19 joined to the positive electrode 11, and a negative electrode lead 20 joined to the negative electrode 12. The negative electrode 12 is formed to be one size larger than the positive electrode 11 in order to suppress precipitation of lithium. The two separators 13 are formed to be one size larger than at least the positive electrode 11, and is disposed to sandwich the positive electrode 11 therebetween, for example.

The positive electrode 11 includes a positive electrode core, and a positive electrode mixture layer provided on each side of the positive electrode core. For the positive electrode core, a foil of a metal, such as aluminum or an aluminum alloy, which is stable within a potential range of the positive electrode 11, a film in which such a metal is disposed on a surface layer thereof, and the like can be used. The positive electrode mixture layer includes a positive electrode active material, a conductive agent such as acetylene black, and a binder such as polyvinylidene fluoride (PVdF). The positive electrode 11 is produced by applying a positive electrode mixture slurry including the positive electrode active material, the conductive agent, the binder, and the like on the positive electrode core, drying the resulting coating film, and then compressing the coating film to form a positive electrode mixture layer on each surface of the positive electrode core.

For the positive electrode active material, for example, a lithium transition metal composite oxide is used. Examples of metal elements contained in the lithium transition metal composite oxide include Ni, Co, Mn, Al, B, Mg, Ti, V, Cr, Fe, Cu, Zn, Ga, Sr, Zr, Nb, In, Sn, Ta, and W. An example of a preferable lithium transition metal composite oxide is a lithium metal composite oxide containing at least one of Ni, Co, and Mn. Specific examples include a composite oxide containing Ni, Co, and Mn, and a composite oxide containing Ni, Co, and Al.

The negative electrode 12 includes a negative electrode core, and a negative electrode mixture layer provided on each side of the negative electrode core. For the negative electrode core, a foil of a metal, such as copper or a copper alloy, which is stable within a potential range of the negative electrode 12, a film in which such a metal is disposed on a surface layer thereof, and the like can be used. The negative electrode mixture layer includes a negative electrode active material, and a binder such as styrenebutadiene rubber (SBR). The negative electrode 12 is produced by applying a negative electrode mixture slurry including the negative electrode active material, the binder, and the like on the negative electrode core, drying the resulting coating film, and then compressing the coating film to form a negative electrode mixture layer on each surface of the negative electrode core.

For the negative electrode active material, for example, graphite such as natural graphite such as flaky graphite, massive graphite, and earthy graphite, and artificial graphite such as massive artificial graphite and graphitized mesophase carbon microbeads are used. For the negative electrode active material, a metal alloyed with lithium such as Si or Sn, an alloy containing such a metal, a compound containing such a metal, and the like may be used, and these may be combined with graphite. A preferable example of the active material is an Si-containing material in which Si fine particles are dispersed in an SiO₂ phase or a silicate phase such as lithium silicate, or an amorphous carbon phase.

The electrolyte is a non-aqueous electrolyte, and includes a non-aqueous solvent, and an electrolyte salt dissolved in the non-aqueous solvent. For the non-aqueous solvent, for example, esters, ethers, nitriles, amides, and mixed solvents containing two or more selected from the foregoing are used. The non-aqueous solvent may contain a halogen-substituted product obtained by substituting at least some of hydrogen atoms in these solvents with a halogen atom such as fluorine. Examples of the non-aqueous solvent include ethylene carbonate (EC), ethyl methyl carbonate (EMC), dimethyl carbonate (DMC), and a mixed solvent thereof. For the electrolyte salt, for example, a lithium salt such as LiPF₆ is used.

The exterior housing body 15 is a bottomed cylindrical metal container in which an upper end portion is opened. A gasket 25 is provided between the exterior housing body 15 and the sealing assembly 16 to ensure the sealing property of the interior of the battery 10 and the insulating property between the exterior housing body 15 and the sealing assembly 16. The exterior housing body 15 has a grooved portion 21 formed by a portion of an inner surface of a side surface portion projecting inward to support the sealing assembly 16. The grooved portion 21 is preferably formed into an annular shape along a circumferential direction of the exterior housing body 15, and supports the sealing assembly 16 on its upper surface. The sealing assembly 16 is fixed to an upper portion of the exterior housing body 15 by the grooved portion 21 and an opening end portion of the exterior housing body 15 crimped to the sealing assembly 16.

The sealing assembly 16 is a circular-plate shaped member provided with a safety vent. The sealing assembly 16 has a structure in which an inner terminal plate 22, an insulating plate 24, and a rupture plate 23 are stacked in this order from the electrode assembly 14 side. The inner terminal plate 22 is a metal plate including an outer peripheral portion 22A with a thick thickness to which the positive electrode lead 19 is to be connected, and a center portion 22B with a thin thickness which is to be separated from the annular portion 22A if an internal pressure of the battery exceeds a predetermined threshold. A plurality of vent holes 22C are formed in the outer peripheral portion 22A.

The rupture plate 23 is disposed to face the inner terminal plate 22 with the insulating plate 24 interposed between the rupture plate 23 and the inner terminal plate 22. In the insulating plate 24, an opening 24A is formed in a radial center portion, and vent holes 24B are formed in portions overlapping with the vent holes 22C in the inner terminal plate 22. The rupture plate 23 includes a vent portion 23A which ruptures if the internal pressure of the battery 10 exceeds a predetermined threshold, and the vent portion 23A is connected to the center portion 22B of the inner terminal plate 22 by welding or the like through the opening 24A of the insulating plate 24. The insulating plate 24 insulates portions except for a connection portion between the outer peripheral portion 22A and the center portion 22B of the vent portion. An outer peripheral portion surrounding the vent portion 23A of the rupture plate 23 is held between a crimped portion formed by bending inward the opening of the exterior housing can 15 via the gasket 25 and the grooved portion 21.

The vent portion 23A includes a joined portion provided in a radial center and projecting to the inside of the battery, and a thin thickness portion formed around the joined portion, and is formed at a radial center portion of the rupture plate 23. The joined portion of the vent portion 23A is joined to the center portion 22B through the opening 24A. In the battery 10, the inner terminal plate 22 to which the positive electrode lead 19 is connected and the rupture plate 23 are electrically connected, so that a current path connecting from the electrode assembly 14 to the rupture plate 23 is formed. If an abnormality occurs in the battery 10, causing an increase in internal pressure of the battery 10, the rupture plate 23 is pushed upward by gas, the inner terminal plate 22 ruptures to cause the center portion 22B to be separated from the outer peripheral portion 22A, so that the vent portion 23A is deformed to project toward the outside of the battery. This causes a current path in the sealing assembly 16 to be cut off. Then, if the internal pressure of the battery 10 further increases after the current path is cut off, the thin thickness portion of the vent portion 23A ruptures, so that a gas discharge port is formed in the rupture plate 23.

Note that the structure of the sealing assembly 16 is not limited to the structure illustrated in FIG. 1. The sealing assembly 16 may have a stacked structure including two vent members, or may have a projected sealing assembly cap that covers the vent members. The safety vent may be provided in the bottom of the exterior housing body 15 instead of in the sealing assembly 16. For example, the safety vent can be provided by forming, in the bottom of the exterior housing body 15, the thin thickness portion that ruptures if the internal pressure of the battery 10 increases.

The battery 10 further comprises a first insulating plate 17 serving as the first insulating member of the present disclosure and a second insulating plate 18 serving as the second insulating member of the present disclosure. The first insulating plate 17 is disposed between the electrode assembly 14 and the sealing assembly 16 to prevent the conduction between the negative electrode 12 and the sealing assembly 16. The second insulating plate 18 is disposed at a position facing the first insulating plate 17 with the electrode assembly 14 interposed between the second insulating plate 18 and the first insulating plate 17. That is, the second insulating plate 18 is disposed between the electrode assembly 14 and the bottom of the exterior housing body 15. The second insulating plate 18 prevents the conduction between the positive electrode 11 and the exterior housing body 15. In the present embodiment, the exterior housing body 15 has a bottomed cylindrical shape, so that the first insulating plate 17 and the second insulating plate 18 have a circular-plate shape. Note that the first insulating member and the second insulating member need not have a plate shape as in the first insulating plate 17 and the second insulating plate 18. The first insulating member and the second insulating member may be block-shaped.

Here, an amount of gas generated from the second insulating plate 18 is greater than an amount of gas generated from the first insulating plate 17 at a predetermined temperature. For example, an amount of gas generated from the second insulating plate 18 when the second insulating plate 18 is heated to 500°C is greater than an amount of gas generated from the first insulating plate 17 when the first insulating plate 17 is heated to 500°C. Examples of a method of increasing an amount of gas generated from the second insulating plate 18 include increasing the thickness of the second insulating plate 18, increasing a volume of the second insulating plate 18, or forming the second insulating plate 18 using a material which provides a great amount of gas in combustion, as described below. In addition, a gas generation layer that generates a large amount of gas at a high temperature may be provided on a surface of the second insulating plate 18. In the battery 10, the first insulating plate 17 need not generate gas at the above-described predetermined temperature.

An amount of gas generated from the second insulating plate 18 at a predetermined temperature is preferably greater than or equal to 110% of an amount of gas generated from the first insulating plate 17 at the same temperature, more preferably greater than or equal to 150%, and further preferably greater than or equal to 200%.

Amounts of gas generated from the first insulating plate 17 and the second insulating plate 18 can be measured using a gas chromatography - mass spectrometry (GC-MS method), for example. To be specific, each of the first insulating plate 17 and the second insulating plate 18 to be measured is placed in a temperature-rising heating device, the inside of the device is replaced with inert gas (He gas), and then the temperature is raised from 25°C to 500°C at a temperature rise rate of 20°C/min. The amount of gas generated from the sample during this period can be measured with the gas chromatography - mass spectrometry device.

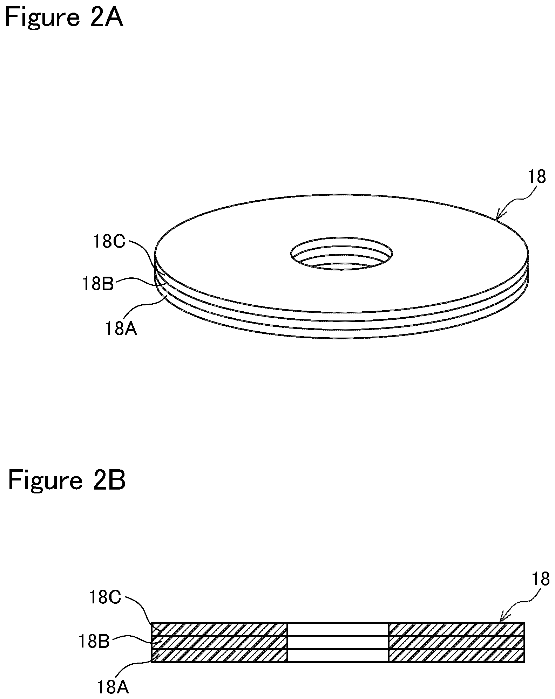

FIG. 2A is a perspective view illustrating the second insulating plate 18 of the present embodiment, and FIG. 2B is a sectional view perpendicular to a radial direction of the second insulating plate 18. As illustrated in FIG. 2A and FIG. 2B, the second insulating plate 18 has a stacked structure in which insulating plates 18A, 18B, and 18C are stacked in this order from a lower layer side. The insulating plates 18A, 18B, and 18C have uniform thickness. When the second insulating plate 18 has a stacked structure, the thickness and volume of the second insulating plate 18 can be increased.

The second insulating plate 18 may be formed of a plurality of insulating plates as in the present embodiment, or may be formed of a single insulating plate. In a case where the second insulating plate 18 is formed of a plurality of insulating plates, the second insulating plate 18 is preferably formed of 10 or less of insulating plates from the standpoint of productivity. In addition, in a case where the second insulating plate 18 is formed of a plurality of insulating plates, the insulating plates may have uniform thickness or may have different thickness. For example, the thickness of the insulating plate on the upper layer side may be greater than the thickness of the insulating plate on the lower layer side.

Each of the insulating plates 18A, 18B, and 18C is provided with one through hole at a center thereof. The through hole passes through each insulating plate in a stacking direction (direction in which a winding axis of the electrode assembly 14 extends) of the insulating plates 18A, 18B, and 18C. As illustrated in FIG. 2B, in the present embodiment, the through holes in the respective insulating plates 18A, 18B, and 18C have the same hole diameter. Note that the inner diameter of the through hole means an average value of the hole diameters in the up-down direction of the battery 10. The number of through holes provided in the insulating plate may be one or two or more. The shape of the first insulating plate 17 is not limited to a particular shape, and the first insulating plate 17 may be provided with one through hole at a center thereof or may be provided with a plurality of through holes. The outer diameters of some insulating plates may be smaller than the outer diameters of the other insulating plates so that the gas can easily move in the battery 10.

An opening ratio of the through hole in each of the insulating plates 18A, 18B, and 18C is preferably greater than or equal to 5% from the standpoint of controlling the flow of the generated gas. Note that the opening ratio refers to a ratio of an area of the through hole with respect to a total area of the insulating plate (area including a portion in which the through hole is formed). The opening ratio of the through hole in each of the insulating plates 18A, 18B, and 18C is preferably less than or equal to 50% from the standpoint of increases the area of the second insulating plate 18. Therefore, an example of a preferable range of the opening ratio of the second insulating plate 18 is greater than or equal to 2% and less than or equal to 50%.

The maximum thickness of the second insulating plate 18 is preferably greater than the maximum thickness of the first insulating plate 17. This makes it possible to easily make the amount of gas generated from the second insulating plate 18 greater than the amount of gas generated from the first insulating plate 17. Note that the maximum thickness of the second insulating plate 18 indicates the total maximum thickness of the stacked insulating plates 18A, 18B, and 18C. The maximum thickness indicates the thickness of a portion where the thickness in the up-down direction of the battery 10 becomes maximum in the plane of the insulating plate.

The maximum thickness of the second insulating plate 18 is preferably greater than or equal to 110% of the maximum thickness of the first insulating plate 17, more preferably greater than or equal to 150%, and further preferably greater than or equal to 200%. For example, the maximum thickness of the second insulating plate 18 is 0.6 mm, and the maximum thickness of the first insulating plate 17 is 0.3 mm.

As the maximum thickness of the second insulating plate 18 is greater than the maximum thickness of the first insulating plate 17, the amount of gas generated from the second insulating plate 18 can be greater than the amount of gas generated from the first insulating plate 17. However, when the maximum thickness of the second insulating plate 18 becomes too great, the volume of the electrode assembly 14 occupied in the battery 10 decreases in a case where the capacity in the battery 10 is constant, so that the battery capacity decreases. The maximum thickness of the second insulating plate 18 is preferably less than or equal to 1000% of the maximum thickness of the first insulating plate 17, more preferably less than or equal to 900%, and further preferably less than or equal to 800%. Therefore, an example of a preferable range of the maximum thickness of the second insulating plate 18 is greater than or equal to 110% and less than or equal to 1000% of the maximum thickness of the first insulating plate 17. If the maximum thickness of the second insulating plate 18 is within the range, it becomes easy to achieve both of suppression of high-temperature gas ejection from an exterior housing body side and good battery characteristics.

The maximum thickness of the second insulating plate 18 is preferably greater than or equal to 0.01 mm, more preferably greater than or equal to 0.2 mm, and further preferably greater than or equal to 0.4 mm. The upper limit of the maximum thickness of the second insulating plate 18 is, for example, 1.5 mm.

The volume of the second insulating plate 18 is preferably greater than the volume of the first insulating plate 17. This makes it possible to make the amount of gas generated from the second insulating plate 18 greater than the amount of gas generated from the first insulating plate 17. Note that the volume of the second insulating plate 18 indicates the total volume of the stacked insulating plates 18A, 18B, and 18C. The volume of the insulating plate indicates the volume of a portion in which a pore such as a through hole is not formed.

The volume of the second insulating plate 18 is preferably greater than or equal to 110% of the volume of the first insulating plate 17, more preferably greater than or equal to 150%, and further preferably greater than or equal to 200%. The volume of the second insulating plate 18 is preferably less than or equal to 1000% of the volume of the first insulating plate 17, more preferably less than or equal to 900%, and further preferably less than or equal to 800% from the standpoint of suppressing a decrease in battery capacity. Therefore, an example of a preferable range of the volume of the second insulating plate 18 is greater than or equal to 110% and less than or equal to 1000% of the volume of the first insulating plate 17. If the volume of the second insulating plate 18 is within the range, it becomes easy to achieve both of suppression of high-temperature gas ejection from an exterior housing body side and good battery characteristics.

The material of each of the first insulating plate 17 and the second insulating plate 18 is not limited to a particular material, but the material is preferably a resin, for example, polypropylene (PP), polyethylene (PE), or nylon (PA). The first insulating plate 17 and the second insulating plate 18 may be made of the same material or may be made of different materials from each other. When the second insulating plate 18 is formed using a material which provides a great amount of gas when the temperature rises, it becomes easy to make the amount of gas generated from the second insulating plate 18 greater than the amount of gas generated from the first insulating plate 17. As a combination of materials, for example, the first insulating plate 17 may be made of polypropylene (PP) and the second insulating plate 18 may be made of nylon (PA). In a case where the second insulating plate has a stacked structure in which a plurality of insulating plates are stacked as in the present embodiment, the insulating plates may be made of the same material or may be made of different materials from each other. For example, the insulating plate on the upper layer side in the stacked structure may be made of a material which generates a great amount of gas, and the insulating plate on the lower layer side in the stacked structure may be made of a material which generates a small amount of gas.

As described above, the battery 10 of the present embodiment comprises the electrode assembly 14 in which the positive electrode 11 and the negative electrode 12 are wound with the separator 13 interposed therebetween, the bottomed cylindrical exterior housing body 15 that houses the electrode assembly 14 and has an opening, the sealing assembly 16 with which the opening is capped, and the first insulating plate 17 and the second insulating plate 18. The safety vent that releases an internal pressure of the exterior housing body 15 if the internal pressure increases to greater than or equal to a predetermined level is provided in the sealing assembly 16, the first insulating plate 17 is disposed between the electrode assembly 14 and the sealing assembly 16 having the safety vent, and the second insulating plate 18 is disposed at a position facing the first insulating plate 17 with the electrode assembly 14 interposed between the second insulating plate 18 and the first insulating plate 17. That is, the second insulating plate 18 is disposed between the electrode assembly 14 and the bottom of the exterior housing body 15. In a case where the safety vent is formed in the bottom of the exterior housing body 15, the first insulating plate 17 is disposed between the electrode assembly 14 and the bottom of the exterior housing body 15 having the safety vent, and the second insulating plate 18 is disposed between the electrode assembly 14 and the sealing assembly 16.

Here, an amount of gas generated from the second insulating plate 18 is greater than an amount of gas generated from the first insulating plate 17 at a predetermined temperature. This can suppress the high-temperature gas ejection from the exterior housing body side even when the electrode assembly in the battery abnormally generates heat. As a mechanism for achieving the above-described effects, the following is assumed. First, when the electrode assembly 14 in the battery abnormally generates heat, the first insulating plate 17 and the second insulating plate 18 are heated, so that gas such as carbon dioxide is generated from the second insulating plate 18. Then, when an amount of gas generated from the second insulating plate 18 is greater than an amount of gas generated from the first insulating plate 17, the internal pressure in the vicinity of the second insulating plate 18 increases, so that a force acts to push out the electrode assembly 14 upward, that is, toward a side on which the safety vent is provided. This makes it easy for the electrode assembly 14 abnormally generating heat to be discharged to the outside of the battery through the safety vent before the high-temperature gas is ejected from the side of the exterior housing body 15. Note that when the electrode assembly 14 is discharged to the outside of the battery through the safety vent, it is considered that the electrode assembly 14 can pass through a region in which the inner diameter of the exterior housing body 15, the sealing assembly 16, or the like is smaller than the outer diameter of the electrode assembly 14, if any. Although the reason cannot be clearly specified, it is considered that when the electrode assembly 14 passes through the above-described region, the electrode assembly 14 is deformed, or the material forming the electrode assembly 14 is gradually discharged to the outside of the battery 10 with the exhaust air, causing a reduction in density of the electrode assembly 14, or the material in the electrode assembly 14 is decomposed under the high temperature, causing a reduction in size of the electrode assembly 14.

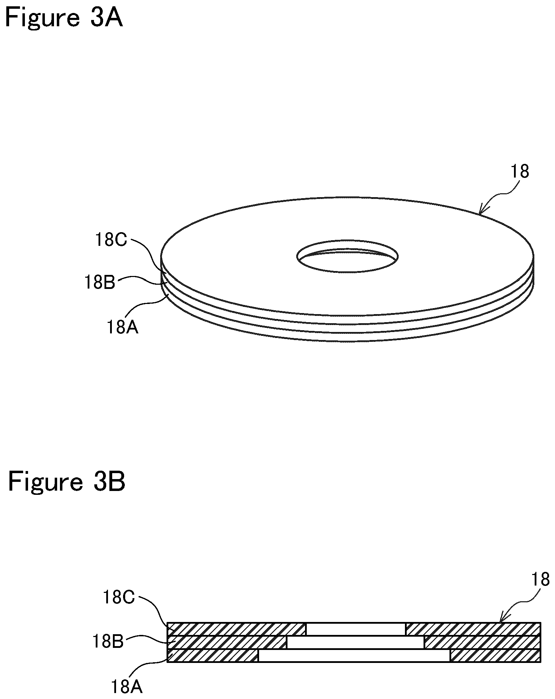

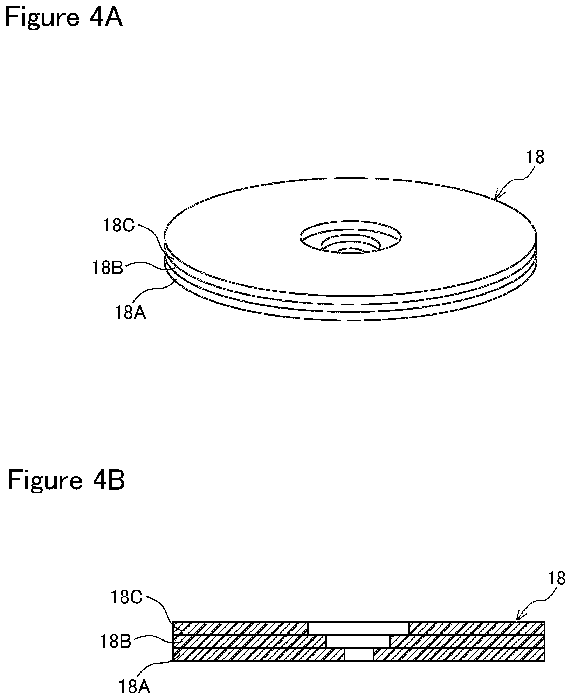

Hereinafter, another example of an embodiment of the battery 10 according to the present disclosure will be described with reference to FIG. 3 and FIG. 4.

FIG. 3A is a perspective view illustrating a second insulating plate 18 of another example of an embodiment, and FIG. 3B is a sectional view perpendicular to a radial direction of the second insulating plate 18. As illustrated in FIG. 3A and FIG. 3B, the second insulating plate 18 has a stacked structure in which insulating plates 18A, 18B, and 18C are stacked in this order from a lower layer side. The insulating plates 18A, 18B, and 18C have uniform thickness, and the thickness is, for example, 0.2 mm.

Each of the insulating plates 18A, 18B, and 18C is provided with one through hole at a center thereof. As illustrated in FIG. 3B, the inner diameter of the through hole provided in each insulating plate decreases toward the insulating plate provided on the upper layer side in the stacked structure. That is, the inner diameter of the insulating plate 18A in the lowermost layer is the greatest, and the inner diameter of the insulating plate 18C in the uppermost layer is the smallest. This makes it easy for the gas generated from the second insulating plate 18 to be escaped toward the upper portion of the battery through the through holes provided in the insulating plates.

FIG. 4A is a perspective view illustrating a second insulating plate 18 of another example of an embodiment, and FIG. 4B is a sectional view perpendicular to a radial direction of the second insulating plate 18. As illustrated in FIG. 4A and FIG. 4B, the second insulating plate 18 has a stacked structure in which insulating plates 18A, 18B, and 18C are stacked in this order from a lower layer side, and the insulating plates have uniform thickness. Each of the insulating plates 18A, 18B, and 18C is provided with one through hole at a center thereof. As illustrated in FIG. 4B, the inner diameter of the through hole provided in each insulating plate increases toward the insulating plate provided on the upper layer side in the stacked structure. That is, the inner diameter of the insulating plate 18A in the lowermost layer is the smallest, and the inner diameter of the insulating plate 18C in the uppermost layer is the greatest. This makes it possible to form a vent hole through which the generated gas is escaped toward the upper portion of the battery while ensuring the volume of the second insulating plate 18.

Note that a gap through which gas passes may be formed between a pair of insulating plates adjacent to each other among the insulating plates 18A, 18B, and 18C. With such a configuration, the gas can easily move in the second insulating plate 18. As a method of forming the above-described gap, the pair of insulating plates may come into contact with each other without being bonded. Furthermore, a groove may be formed in a surface of at least one insulating plate of the pair of insulating plates, the surface facing the other insulating plate. With such a configuration, a gap surrounded by the groove and the other insulating plate is formed. Furthermore, in a case where a through hole is formed in the insulating plate, one end of the above-described groove is connected to the through hole, and the other end of the groove may extend to the outer peripheral edge of the one insulating plate. With such a configuration, the gas passing through the through holes can easily move in the second insulating plate. In a case where a plurality of through holes are formed in the one insulating plate, the above-described groove may be connected to the adjacent through holes among the plurality of through holes at both ends of the groove. Alternatively, a cut may be formed in the outer peripheral edge of the one insulating plate.

### EXAMPLES

Hereinafter, the present disclosure will be further described in detail with Examples, but the present disclosure is not limited to these Examples.

### <Examples>

An electrode assembly in which a positive electrode and a negative electrode are wound with a separator interposed therebetween was housed in a bottomed cylindrical exterior housing body made of low-carbon steel, a non-aqueous electrolyte was injected in the exterior housing body, and then a grooved portion was formed by spinning the exterior housing body. The inner terminal plate was disposed on the grooved portion via a gasket, and a positive electrode lead was connected to an upper surface of the inner terminal plate by means of ultrasonic welding. Then, after vacuum degassing was performed, a rupture plate was disposed on the inner terminal plate, and the rupture plate and the inner terminal plate were welded to each other. Finally, an upper end portion of the exterior housing body was crimped to obtain a battery. Note that a sealing assembly including a safety vent illustrated in FIG. 1 was formed of the inner terminal plate, the rupture plate, and the gasket.

A second insulating plate was disposed between a bottom of the exterior housing body and the electrode assembly. The second insulating plate had a stacked structure in which three insulating plates A1 were stacked. The detail of the insulating plates A1 were as follows.
Diameter: 19 mm, Thickness: 0.2 mm, Volume: 56 mm³
Material: Polypropylene (PP)
Shape of through hole: A through hole having a diameter of 6 mm was formed at a center of the insulating plate A1.

A first insulating plate made of polypropylene (PP) (thickness: 0.3 mm, volume: 81 mm³) was disposed between the sealing assembly and the electrode assembly.

### <Comparative Example>

A cylindrical battery was produced in the same manner as in the Example except that the number of the above-described insulating plates A1 forming the second insulating plate was changed from three to one.

### [Evaluation of Amount of Generated Gas]

Amounts of gas generated from the first insulating plate and the second insulating plate in each of the Example and the Comparative Example were measured using a gas chromatography - mass spectrometry (GC-MS method). Each of the first insulating plate 17 and the second insulating plate 18 in each of the Example and the Comparative Example was placed in a temperature-rising heating device, the inside of the device was replaced with inert gas (He gas), and then the temperature was raised from 25°C to 500°C at a temperature rise rate of 20°C/min to measure an amount of generated gas. As a result, in the Example, the amount of gas generated from the second insulating plate was greater than the amount of gas generated from the first insulating plate, and in the Comparative Example, the amount of gas generated from the second insulating plate was smaller than the amount of gas generated from the first insulating plate.

### [Evaluation of Heating Test of Battery]

Eight batteries were produced in each of the Example and the Comparative Example, and each was placed in an oven set at 500°C and heated for 10 minutes, and then the heating was stopped. Then, the appearance of the side of the exterior housing body was observed, and the presence or absence of perforation in the side (presence or absence gas ejection from the side) was evaluated. As a result, in the batteries of the Example, the perforation was not found in all of the eight batteries. On the other hand, in the batteries of the Comparative Example, the perforation was found in the six batteries. In this heating test, the safety vent was activated in the batteries of the Example and the batteries of the Comparative Example. However, the battery of the Example showed that the weight of the battery decreased faster than that of the battery of the Comparative Example after the safety vent was activated, and therefore, it is considered that the battery of the Example discharges the electrode assembly more smoothly than the battery of the Comparative Example.

The present invention is not limited to the above-described embodiments and modifications thereof, and it is needless to say that various changes and improvements are possible within the matters described in the claims of the present application.

### REFERENCE SIGNS LIST

10 Battery (power storage device), 11 Positive electrode, 12 Negative electrode, 13 Separator, 14 Electrode assembly, 15 Exterior housing body, 16 Sealing assembly, 17 First insulating plate (first insulating member), 18 Second insulating plate (second insulating member), 18A, 18B, 18C Insulating plate, 19 Positive electrode lead, 20 Negative electrode lead, 21 Groove portion, 22 Inner terminal plate, 22A Outer peripheral portion, 22B Center portion, 22C Vent hole, 23 Rupture plate, 23A Vent portion, 24 Insulating plate, 24A Opening, 24B Vent hole, 25 Gasket

## Claims

1. A power storage device, comprising:
an electrode assembly in which a positive electrode and a negative electrode are wound with a separator interposed between the positive electrode and the negative electrode;
a bottomed cylindrical exterior housing body that houses the electrode assembly and has an opening;
a sealing assembly with which the opening is capped; and
a first insulating member and a second insulating member, wherein
a safety vent that releases an internal pressure of the exterior housing body if the internal pressure increases to greater than or equal to a predetermined level is provided in any one of a bottom of the exterior housing body and the sealing assembly,
the first insulating member is disposed between the electrode assembly and the safety vent,
the second insulating member is disposed at a position facing the first insulating member via the electrode assembly, and
an amount of gas generated from the second insulating member is greater than an amount of gas generated from the first insulating member at a predetermined temperature.

2. The power storage device according to claim 1, wherein
each of the first insulating member and the second insulating member has a plate shape, and
a maximum thickness of the second insulating member is greater than a maximum thickness of the first insulating member.

3. The power storage device according to claim 2, wherein
the maximum thickness of the second insulating member is greater than or equal to 110% and less than or equal to 1000% of the maximum thickness of the first insulating member.

4. The power storage device according to any one of claims 1 to 3, wherein
the maximum thickness of the second insulating member is greater than or equal to 0.01 mm.

5. The power storage device according to claim 1, wherein
a volume of the second insulating member is greater than a volume of the first insulating member.

6. The power storage device according to claim 5, wherein
the volume of the second insulating member is greater than or equal to 110% and less than or equal to 1000% of the volume of the first insulating member.

7. The power storage device according to any one of claims 1 to 6, wherein
a material forming the first insulating member is different from a material forming the second insulating member.

8. The power storage device according to any one of claims 1 to 7, wherein
the second insulating member includes a plurality of insulating plates stacked.

9. The power storage device according to claim 8, wherein
the plurality of insulating plates have respective through holes formed,
the through holes overlap with each other, and
the through holes have the same inner diameter.

10. The power storage device according to claim 8, wherein
the plurality of insulating plates have respective through holes formed,
the through holes overlap with each other, and
the inner diameters of the through holes decrease toward an insulating plate provided on a side of the electrode assembly.

11. The power storage device according to claim 8, wherein
the plurality of insulating plates have respective through holes formed,
the through holes overlap with each other, and
the inner diameters of the through holes increase toward an insulating plate provided on a side of the electrode assembly.

12. The power storage device according to any one of claims 8 to 11, wherein
the plurality of insulating plates include a pair of insulating plates adjacent to each other, and
a gap through which gas generated from the second insulating member passes is formed between the pair of insulating plates.

13. The power storage device according to claim 12, wherein
the pair of insulating plates have respective through holes,
the through holes overlap with each other,
a groove is formed in a surface of at least one insulating plate of the pair of insulating plates, the surface facing the other insulating plate, and
one end of the groove is connected to a through hole of the one insulating plate.

14. The power storage device according to claim 12, wherein
a cut is formed in an outer peripheral edge of at least one insulating plate of the pair of insulating plates.
